# EUROPÄISCHE PATENTANMELDUNG

(11) **EP 3 561 745 A1**
(43) Veröffentlichungstag der Anmeldung: **30.10.2019**
(21) Anmeldenummer: 18169259.1
(22) Anmeldetag: 25.04.2018
(51) Int. Cl.: G06Q 10/06

(54) **DIGITALER MARKTPLATZ ZUR STEUERUNG VERTEILTER PRODUKTIONSSYSTEME**

(71) Anmelder: Siemens Aktiengesellschaft, 80333 München (DE)
(72) Erfinder: Egger, Andreas, 1200 Wien (AT); Geiger, Sebastian, 1050 Wien (AT); Meixner, Sebastian, 1220 Wien (AT); Schall, Daniel, 1220 Wien (AT)
(74) Vertreter: Maier, Daniel Oliver

(57) **Zusammenfassung**

Die Erfindung betrifft einen digitalen Marktplatz zur Steuerung verteilter Produktionssysteme bei dem Auftraggeber Produktionsvorgänge an Hersteller vergeben, mit folgenden Verfahrensschritten:
- Auftraggeber(K) und Hersteller (H) erstellen virtuelle Repräsentanten im digitalen Markplatz (M);
- Die Auftraggeber (K) legen die für zu vergebende Produktionsvorgänge maßgeblichen Parameter fest;
- Die Hersteller (H) geben ihre verfügbaren Fertigungskapazitäten an;
- Zu vergebende Produktionsvorgänge und verfügbare Fertigungskapazitäten werden verglichen und eine Auftragsvergabe ausgelöst;
- Der Verlauf der Produktionsvorgänge wird an den Auftraggeber kommuniziert.

## Beschreibung

Die Erfindung betrifft einen digitalen Marktplatz zur Steuerung verteilter Produktionssysteme.

Verteilte, dezentrale Produktionssysteme bilden einen erfolgversprechenden Ansatz zur Lösung der zunehmenden Komplexität moderner flexibler Fertigungen.

Ermöglicht werden diese dezentralen intelligenten Systeme durch die flächendeckende Verfügbarkeit industriell einsetzbarer Internetverbindungen. Logisch werden die Systeme durch die konsequente Anwendung von dezentralen Steuerungsprinzipien wie Multiagentensystemen gekoppelt, die sich am "Internet der Dinge" orientieren. Dies ermöglicht die Integration von realer und virtueller Welt. Produkte, Geräte und Objekte mit eingebetteter Software wachsen dermaßen zu verteilten, funktionsintegrierten und rückgekoppelten Systemen zusammen.

Eine wesentliche Voraussetzung für den Erfolg von verteilten Produktionssystemen ist die Transparenz der Prozesse.

Dies nicht nur während des Produktionsvorganges sondern auch danach, wenn beispielsweise die Ursache von Produktfehlern ermittelt werden soll, oder wenn im Falle von Gewährleistungs- oder Garantiefragen der Verursacher bestimmter Mängel des hergestellten Produktes ermittelt werden soll.

Diese vollständige Transparenz ist insbesondere bei dynamischer Auswahl verteilter Produktionssysteme ein ungelöstes Problem. Dies insbesondere dann, wenn diese Produktionssysteme zu unterschiedlichen Unternehmen gehören, die ihre Aktivitäten nur temporär miteinander verknüpfen und keine einheitlichen, aufeinander abgestimmten Steuerungs-, und Kontrollsysteme aufweisen.

Informationen die dabei in typischer Weise von Relevanz sind, sind beispielsweise der aktuelle Status eines Herstellungsvorganges, die daran beteiligten Produktionssysteme sowie die entsprechenden Unternehmen, die Parameter, mit denen ein bestimmtes Produktionssystem einen Herstellungsvorgang durchgeführt hat, die Abfolge der Produktionsschritte und die Ausstattung der Produktionssysteme, wie z.B. die Werkzeuge einer Bearbeitungsmaschine.

Es ist Aufgabe der vorliegenden Erfindung, ein verbessertes Verfahren zur Steuerung verteilter Produktionssysteme anzugeben, mit dem Transparenz der Prozesse erzielt wird.

Diese Aufgaben werden gelöst durch ein Verfahren gemäß den Merkmalen des Patentanspruchs 1.

Vorteilhafte Ausgestaltungen ergeben sich aus den abhängigen Patentansprüchen.

Der Begriff "Internet der Dinge" wird für Informations- und Kommunikationstechnologien einer globalen Infrastruktur verwendet, welche die Vernetzung und das Zusammenwirken physischer und virtueller Gegenstände ermöglichen.

Mit Technologien des "Internets der Dinge" implementierte Funktionen erlauben die Interaktion zwischen Mensch und vernetzten elektronischen Systemen sowie zwischen den Systemen an sich. Sie können darüber hinaus auch den Menschen bei seinen Tätigkeiten unterstützen.

Ein wesentlicher Aspekt ist dabei die Verknüpfung physischer Objekte mit einer virtuellen Repräsentation den sogenannten "Digital Twins" in einer Internet-ähnlichen Struktur.

Weitere wesentliche Aspekte sind die Identifikation der physischen Objekte, beispielsweise mittels RFID, Strichcode oder 2D-Code und die Erfassung von Zuständen bzw. die Ausführung von Aktionen mittel Sensoren und Aktoren.

Als grundlegendes Architekturkonzept für das Internet der Dinge kann das sogenannte Edge Computing verwendet werden, welches eine Verknüpfung eindeutig identifizierbarer physischer Objekte mit einer virtuellen Repräsentation in einer Internet-ähnlichen Struktur herstellt.

Beim Edge Computing werden Computer-Anwendungen, Daten und Dienste von zentralen Knoten (Rechenzentren) weg zu den äußeren Rändern eines Netzwerks verlagert. Dieser Ansatz ermöglicht den Einsatz von Ressourcen, die nicht permanent mit einem Netzwerk verbunden sind wie Controller, Notebooks, Smartphones, Tabletcomputer und Sensoren.

Edge Computing beinhaltet zahlreiche Technologien wie Sensornetze, mobile Datenerfassung, mobile Signaturanalyse, Peerto-Peer- sowie Ad-hoc-Vernetzung.

Damit wird insbesondere auch der Umstand ausgenutzt, dass Messgeräte und Sensoren zunehmend mit Intelligenz, d.h. lokalen Rechenkapazitäten ausgestattet sind.

Die Nutzung des Edge Computing verringert signifikant das zu übertragende Datenvolumen, wodurch sich die Übertragungskosten und die Wartezeiten verringern und sich die Servicequalität insgesamt verbessert. Beim Edge Computing sind zentrale Rechenzentren seltener bzw. überhaupt nicht notwendig, wodurch potentielle Engstellen für den Datentransfer und eine die damit verbundenen Fehlerquellen vermieden werden. Die Sicherheit verbessert sich ebenfalls, da verschlüsselte Dateien näher am Netzwerkkern verarbeitet werden. Wenn die Daten das Unternehmen erreichen, können Viren, verfälschte Daten und Hackerangriffe frühzeitig abgefangen werden. Letztendlich erweitert die Fähigkeit zur Virtualisierung die Skalierbarkeit, was bedeutet, dass sich die Anzahl der Edge-Geräte im Netzwerk problemlos steigern lässt. Beim Edge Computing werden Echtzeit-Anforderungen im Internet der Dinge besser unterstützt als dies in der Cloud der Fall ist.

Als Blockchain wird im engeren Sinne eine kontinuierlich erweiterbare Liste von Datensätzen - Blöcken - bezeichnet, welche mittels kryptographischer Verfahren miteinander verkettet sind. Jeder Block enthält dabei typischerweise einen kryptographisch sicheren Hash, also Streuwert des vorhergehenden Blocks, einen Zeitstempel und Transaktionsdaten.

Im weiteren Sinne wird der Begriff Blockchain für ein Konzept genutzt, mit dem ein Buchführungssystem dezentral geführt werden kann und dennoch ein Konsens über den richtigen Zustand der Buchführung erzielt wird, auch wenn viele Teilnehmer an der Buchführung beteiligt sind.

Worüber in dem Buchführungssystem Buch geführt wird, ist für den Begriff der Blockchain unerheblich. Entscheidend ist, dass spätere Transaktionen auf früheren Transaktionen aufbauen und diese als richtig bestätigen, indem sie die Kenntnis der früheren Transaktionen beweisen. Damit wird es unmöglich gemacht, Existenz oder Inhalt der früheren Transaktionen zu manipulieren oder zu tilgen, ohne gleichzeitig alle späteren Transaktionen ebenfalls zu zerstören, die die früheren bestätigt haben. Andere Teilnehmer der dezentralen Buchführung, die noch Kenntnis der späteren Transaktionen haben, würden eine manipulierte Kopie der Blockchain ganz einfach daran erkennen, dass sie Inkonsistenzen in den Berechnungen aufweist.

Die Erfindung wird anhand von Figuren näher erläutert. Es zeigen beispielhaft:

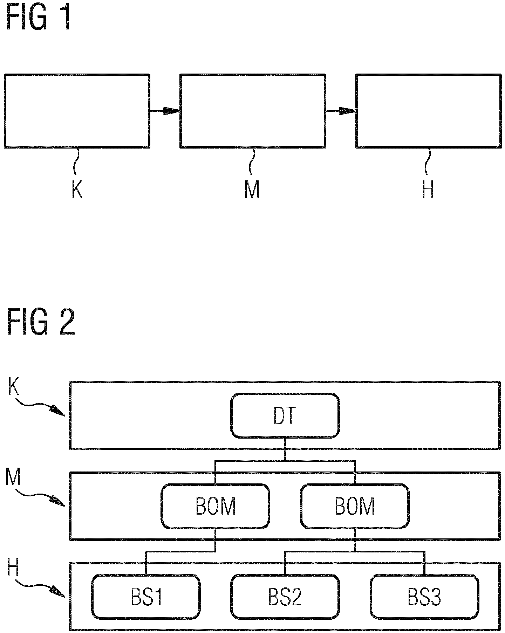

Figuren 1, 2 und 3 in unterschiedlichen Detaillierungsgraden die Struktur eines erfindungsgemäßen digitalen Marktplatzes An dem Produktionssystem gemäß Fig. 1 sind Auftraggeber K, ein Marktplatz M und Hersteller H beteiligt. Diese werden durch entsprechende Anwendungsprogramme beispielsweise auf Basis des cloudbasierten offenen IoT -Betriebssystemes MindSphere von Siemens im Internet der Dinge digital repräsentiert.

Die Auftraggeber K sind nun daran interessiert, sich für ihre zu fertigenden Produkte bei den verschiedenen Herstellern die jeweils optimalen Produktionskapazitäten zu sichern.

Die Hersteller H sind daran interessiert, ihre Produktionskapazitäten optimal auszulasten.

Über den digitalen Marktplatz M können die Auftraggeber K nun ihre Produktionsvorgänge an unterschiedliche Hersteller H vergeben.

Der grundlegende Ablauf dabei wird anhand der Fig. 2 erläutert.

Der Auftraggeber K entwirft ein Produkt, sowie die für die Herstellung erforderlichen Materialstücklisten BOM und die einzelnen Bearbeitungsschritte BS1, BS2, BS3 basierend auf einem Produktdesign (z.B. CAD Zeichnung)

Wie in Fig. 2 dargestellt können die unterschiedlichen Bearbeitungsschritte BS1, BS2, BS3 an unterschiedliche Hersteller H vergeben werden. Diese Bearbeitungsschritte BS1, BS2, BS3 können beispielsweise mechanische Bearbeitungsvorgänge wie Fräsen, Schneiden oder Bohren, Gießen, das Bestücken von Leiterplatten, die Montage eines Gerätes oder aber auch eine Sequenz von Funktionalitäten zur Bearbeitung des Produktes umfassen.

Hersteller H, die an entsprechenden Aufträgen interessiert sind, müssen ihre Fertigungskapazitäten mit geeigneter Darstellung der durch sie ausführbaren Funktionalitäten, auf dem digitalen Marktplatz M präsentieren, d.h. sie müssen beispielsweise angeben, über welche Maschinen MS mit welchen Werkzeugen sie verfügen.

Der digitale Markplatz M, ein Anwendungsprogramm, das durch einen neutralen Anbieter betrieben wird, ermittelt dann mit geeigneten Algorithmen die Angebote mit der besten Übereinstimmung und überliefert dem Auftraggeber K entsprechende Vorschläge.

Denkbar ist dabei auch, dass die Entscheidung, welche Angebote angenommen werden, vollständig dem digitalen Marktplatz M überlassen wird.

Der digitale Marktplatz M, bzw. dessen Anbieter legt auch die Metasprache fest, mittels der die Bearbeitungsschritte BS1, BS2, BS3 und die Funktionalitäten der Maschinen MS einheitlich beschreiben werden müssen. Darüber hinaus werden geeignete Mittel (Anwendungsprogramme) zur Eingabe der Daten zur Verfügung gestellt

Sobald ein Produktionsvorgang aufgenommen wird, ist eine vollständige Transparenz vor allem bei dynamischer Zuteilung unterschiedlicher Bearbeitungsschritte BS1, BS2, BS3 an unterschiedliche Hersteller H von wesentlicher Bedeutung.

Der Digital Twin DT des Produktes befindet sich beim Auftraggeber K und ist nicht direkt in den digitalen Marktplatz M integriert. Um eine virtuelle Repräsentation des Produktes beim Auftraggeber K einzurichten sind jedoch Daten aus dem Produktionsprozess, welche beim Hersteller H generiert werden, notwendig.

Herkömmliche Methoden der Gestaltung von Vereinbarungen für den Austausch von Produktionsdaten sind für ein flexibles Produktionssystem mit dynamischer Verteilung der Aufgaben zu zeitaufwändig und damit nicht geeignet.

Erfindungsgemäß wird die Blockchain Technologie BCT genutzt um elektronische Basis- und Folgevereinbarungen, sogenannte Smart Contracts SCR (Smart Contract Root Marktplatz), SCO (Smart Contract Order), SCS (Smart Contract Step Order) dynamisch zu gestalten und miteinander zu verknüpfen, sodass auch die rechtliche Absicherung der Zusammenarbeit den Anforderungen an eine rasche, zuverlässige und transparente Gestaltung der Prozesse genügt. Smart Contracts SCR, SCO, SCS sind Computerprotokolle, die Verträge abbilden oder überprüfen oder die Verhandlung oder Abwicklung eines Vertrags technisch unterstützen.

Die Vereinbarungen müssen der Zusammenarbeit mit flexibler Verteilung der Aufgaben entsprechen, es kann daher notwendig sein, für jeden einzelnen Bearbeitungsschritt im Herstellvorgang eine eigene Vereinbarung SCS d.h. eine Instanz eines Smart Contracts abzuschließen.

Erfindungsgemäß dienen die Vereinbarungen auch der Kommunikation des Verlaufs der Produktionsvorgänge, d.h. der Rückmeldung des Bearbeitungszustandes an den Digital Twin DT des Auftraggebers K. Dies geschieht ereignisgesteuert, beispielsweise bei Abschluss eines vereinbarten Produktionsvorganges oder eines Verarbeitungsschrittes einer Maschine MS (z.B. abgeschlossener Fräsvorgang). Dazu werden verschiedene Prozessparameter wie z.B. Drehzahl der Spindel einer Fräsmaschine oder Vorschub der Spindel als diskrete Werte in den Smart Contracts SCS hinterlegt.

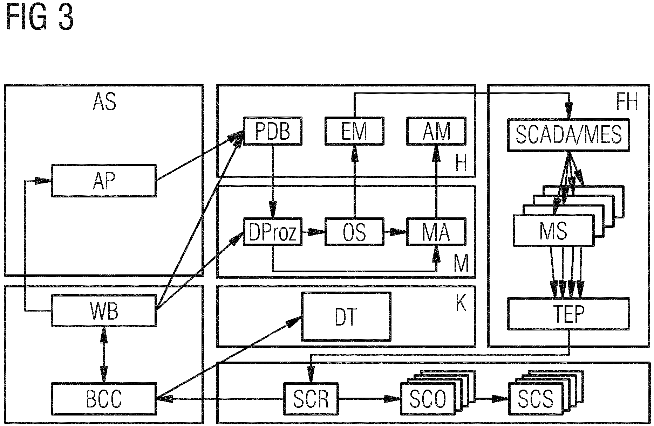

Fig. 3 zeigt ein beispielhaftes Produktionssystem auf Basis des cloudbasierten offenen IoT -Betriebssystemes MindSphere MS der Siemens AG.

Auf Basis dieses Betriebssystemes werden mit entsprechenden Softwaremodulen AP, d.h. Anwendungsprogrammen die Funktionalitäten des Marktplatzes M, die Repräsentationen von Auftraggeber K und Hersteller H, sowie Teile der Blockchain Funktion BCT zur Absicherung der Interaktionen verwirklicht.

Die Blockchain Technologie BCT basiert auf dem Konzept eines verteilten Datenbankmanagementsystems. Sowohl Auftraggeber K als auch Hersteller H sind im Besitz der exakt gleichen Kopie der Produktionsdaten die in der Blockchain fälschungssicher abgelegt sind. Somit ist es möglich das sowohl Auftraggeber K als auch Hersteller H einen Nachweis über den Verlauf des Produktionsprozesses (z.B., mit welcher Spindeldrehzahl wurde in Bauteil gefräst) jederzeit erbringen können. Der Marktplatz M wird dazu nicht benötigt.

Eine Voraussetzung der Erfindung ist naturgemäß, dass die Maschinen MS in der Fabrik des Herstellers FH in geeigneter Weise mit dem Produktionssystem kommunizieren können, d.h. in das Internet der Dinge integriert sind. Dies geschieht vorzugsweise mit Prozeß-und Produktionsleitsystemen SCADA/MES und entsprechenden virtuellen Repräsentationen, sowie mit verschlüsselter "trustet" Kommunikation über eine Trusted Edge Platform TEP.

Die Nutzung der Blockchain Technologie BCT mittels geeignetem Block Chain Client BCC hat insbesondere den Vorteil, dass eine nachträgliche Manipulation der Vereinbarung mit hoher Sicherheit ausgeschlossen werden kann.

Dies ist vor allem dann von Bedeutung, wenn beim Produkt Qualitätsmängel auftreten und ihre Ursache im Herstellungsvorgang ermittelt werden soll.

Der Zugang zu dem digitalen Marktplatz M erfolgt mittels Webbrowser WB und Anwendungsprogrammen AP, die unterschiedliche Funktionalitäten wie Dashboard DB, Auftrags-, und Maschinenservice OS, MA im Marktplatz M, sowie Event- und Assetmanager EM, AM und Dashboard Proxy PDB auf Seite des Herstellers H realisieren und von einem App Store zur Verfügung gestellt werden.

### Bezugszeichenliste

- K: Auftraggeber
- M: Marktplatz
- AS: Industrial App Store
- H: Hersteller
- DT: Digital Twin
- BS1, BS2, BS3: Bearbeitungsschritte
- BCT: Blockchain Technologie
- BOM: Materialstücklisten
- SCR, SCO, SCS: Smart Contracts
- FH: Fabrik des Herstellers
- MS: Maschinen
- AP: Softwaremodule
- WB: Webbrowser
- BCC: Blockchain Client
- PDB: Proxy für Dashboard
- EM: Event Manager
- AM: Assetmanager
- DB: Dashboard
- OS: Auftragsservice
- MA: Maschinenservice
- TEP: Trusted Edge Platform
- SCADA/MES: Prozeß-und Produktionsleitsystem

## Patentansprüche

1. Digitaler Marktplatz zur Steuerung verteilter Produktionssysteme bei dem Auftraggeber Produktionsvorgänge an Hersteller vergeben, mit folgenden Verfahrensschritten:
- Auftraggeber (K) und Hersteller (H) erstellen virtuelle Repräsentanten im digitalen Markplatz (M) ;
- Die Auftraggeber(K) legen die für zu vergebende Produktionsvorgänge maßgeblichen Parameter fest;
- Die Hersteller (H) geben ihre verfügbaren Fertigungskapazitäten an;
- Zu vergebende Produktionsvorgänge und verfügbare Fertigungskapazitäten werden verglichen und eine Auftragsvergabe ausgelöst;
- Der Verlauf der Produktionsvorgänge wird an den Auftraggeber kommuniziert.

2. Digitaler Marktplatz zur Steuerung verteilter Produktionssysteme nach Anspruch 1, **dadurch gekennzeichnet, dass** ein für die Kommunikation des Verlaufs der Produktionsvorgänge mit Hilfe der Blockchain Technologie (BCT) erfolgt.

3. Digitaler Marktplatz zur Steuerung verteilter Produktionssysteme nach Anspruch 1, **dadurch gekennzeichnet, dass** als maßgebliche Parameter für einen Produktionsvorgang Materialstücklisten (BOM)und die einzelnen Bearbeitungsschritte (BS1, BS2, BS3) festgelegt werden.

4. Digitaler Marktplatz zur Steuerung verteilter Produktionssysteme nach Anspruch 1, **dadurch gekennzeichnet, dass** der Verlauf der Produktionsvorgänge mit Hilfe eines Digital Twins (DT) dargestellt wird.

5. Digitaler Marktplatz zur Steuerung verteilter Produktionssysteme nach Anspruch 1, **dadurch gekennzeichnet, dass** die Kommunikation des Verlaufs der Produktionsvorgänge mit Hilfe der Blockchain Technologie (BCT) mittels Smart Contracts (SCR, SCO, SCS) geschieht.
